# FASCICULE DE BREVET EUROPEEN

(11) **EP 0 828 426 B1**
(45) Date de publication et mention de la délivrance du brevet: **19.01.2000**
(21) Numéro de dépôt: 96919853.0
(22) Date de dépôt: 02.05.1996
(51) Int. Cl.: A21D 8/02, A21D 13/08

(54) **PROCEDE DE FABRICATION D'UNE PATE LEVEE OU LEVEE FEUILLETEE ET ALIMENTS A BASE D'UNE TELLE PATE**
VERFAHREN ZUR HERSTELLUNG VON EINEM HEFETEIG ODER LAMINIERTEM HEFETEIG UND MIT EINEM SOLCHEN TEIG HERGESTELLTEN NAHRUNGSMITTEL
METHOD FOR PREPARING LEAVENED DOUGH OR LEAVENED PUFF PASTRY AND FOOD PRODUCTS MADE THEREFROM

(30) Priorité: 02.05.1995 FR 9505203; 17.07.1995 FR 9508594
(43) Date de publication de la demande: 18.03.1998
(73) Titulaire: Douaire, Philippe, 750004 Paris (FR); Vincensini, Sandrine, 75012 Paris (FR)
(72) Inventeur: Douaire, Philippe, 750004 Paris (FR); Vincensini, Sandrine, 75012 Paris (FR)
(74) Mandataire: Hurwic, Aleksander
(86) Numéro de dépôt international: FR9600665
(87) Numéro de publication internationale: WO9634530

(56) Documents cités:
- EP-A- 0 207 903
- EP-A- 0 443 807
- EP-A- 0 561 702
- WO-A-93/22928

## Description

La présente invention se rapporte principalement à une pâte levée et aux aliments à base d'une telle pâte, notamment au pain, à une pâte levée et feuilletée et aux aliments à base de telle pâte, notamment aux viennoiseries et à leur procédé de fabrication.

La pâte levée ou levée feuilletée pousse grâce au dégagement de gaz carbonique par la levure, et de vapeur d'eau au cours des opérations de fermentation et de pousse. La pousse des pâtes levées ou des pâtes levées brisées immobilise pendant un temps important une chambre de pousse coûteuse et consomme de grandes quantités d'énergie. De plus, la fragilité de la pâte poussée, fraîche ou congelée limite les possibilités de sa manipulation, manutention et/ou de son transport.

C'est par conséquent un but de la présente invention d'offrir une pâte levée ou une pâte levée feuilletée ne nécessitant pas d'étape de pousse.

C'est aussi un but de la présente invention d'offrir une pâte levée ou une pâte levée feuilletée qui, après une étape de pousse, présente un volume important.

C'est également un but de la présente invention d'offrir des aliments à base de telle pâte présentant d'excellentes qualités organoleptiques.

C'est aussi un but de la présente invention d'offrir des aliments ayant un bel aspect, notamment une pâte aérée régulière.

C'est également un but de la présente invention d'offrir des aliments à base de pâte levée ou levée feuilletée permettant une longue conservation et une préparation rapide.

C'est aussi un but de la présente invention d'offrir un procédé industriel de fabrication d'aliments à base de pâte levée ou levée feuilletée.

C'est également un but de la présente invention d'offrir des aliments à base de pâte levée et/ou levée feuilletée ayant un faible coût de revient.

C'est également un but de la présente invention de permettre d'obtenir des produits crus, crus pré-poussés, crus poussés ou cuits qui ont une bonne tenue à la surgélation.

Ces buts sont atteints selon la présente invention par un aplatissement de la pâte en fin de façonnage, ce qui, de manière surprenante, permet d'obtenir par la cuisson une pâte aérée sans étape de pousse ou d'augmenter le volume d'une pâte poussée.

L'invention a principalement pour objet un procédé de fabrication d'un aliment comportant les étapes consistant à :
a) préparer une pâte levée ou levée feuilletée contenant du gluten, à base de farine et d'eau ;
b) pétrir la pâte ;
c) mettre en forme ou façonner la pâte ;
caractérisé en ce qu'il comporte en outre une étape ultérieure consistant à :
d) aplatir un produit à base de pâte en fin de façonnage de façon à allonger les glutens pour permettre le développement de la pâte lors d'une étape ultérieure de cuisson.

L'invention a également pour objet un procédé, caractérisé en ce que l'étape d) est une étape de laminage de la pâte.

L'invention a également pour objet un procédé, caractérisé en ce qu'à l'étape d), la pâte subit un laminage progressif en passant entre une pluralité de paires de rouleaux, l'espace ménagé entre les deux rouleaux d'une paire étant inférieur à l'espace ménagé entre les deux rouleaux de la paire précédente.

L'invention a également pour objet un procédé, caractérisé en ce que l'on incorpore dans la pâte un hydrocoloïde comestible ou un mélange d'hydrocoloïdes comestibles.

L'invention a également pour objet un procédé, caractérisé en ce que l'on incorpore dans la pâte de la cystéine dans des proportions correspondant à une action réductrice sur les glutens.

L'invention a également pour objet un procédé, caractérisé en ce que le ou les hydrocoloïde(s) comporte(nt) de la gélatine.

L'invention a également pour objet un procédé, caractérisé en ce que le ou les hydrocoloïde(s) comporte(nt) de la CMC.

L'invention a également pour objet un procédé, caractérisé en ce que le ou les hydrocoloïde(s) comporte(nt) de la pectine.

L'invention a également pour objet un procédé, caractérisé en ce qu'il comporte en outre une étape ultérieure e) de congélation de la pâte aplatie, notamment laminée.

L'invention a également pour objet un procédé, caractérisé en ce qu'il comporte entre l'étape d) d'aplatissement de la pâte et l'étape e) de congélation de la pâte, une étape f) consistant à faire reposer la pâte à température ambiante pendant 10 à 20 mn.

L'invention a également pour objet un procédé, caractérisé en ce qu'il comporte en outre une étape ultérieure g) de cuisson de la pâte.

L'invention a également pour objet une viennoiserie comportant une pâte levée et feuilletée, notamment aux croissants, caractérisée en ce qu'elle est fabriquée par le procédé selon l'invention.

L'invention sera mieux comprise au moyen de la description ci-après et des figures annexées données comme des exemples non limitatifs et sur lesquels :
- la figure 1 est un schéma synoptique d'un procédé de fabrication de croissants de type connu ;
- la figure 2 est une vue analogue de l'exemple préféré du procédé selon la présente invention.

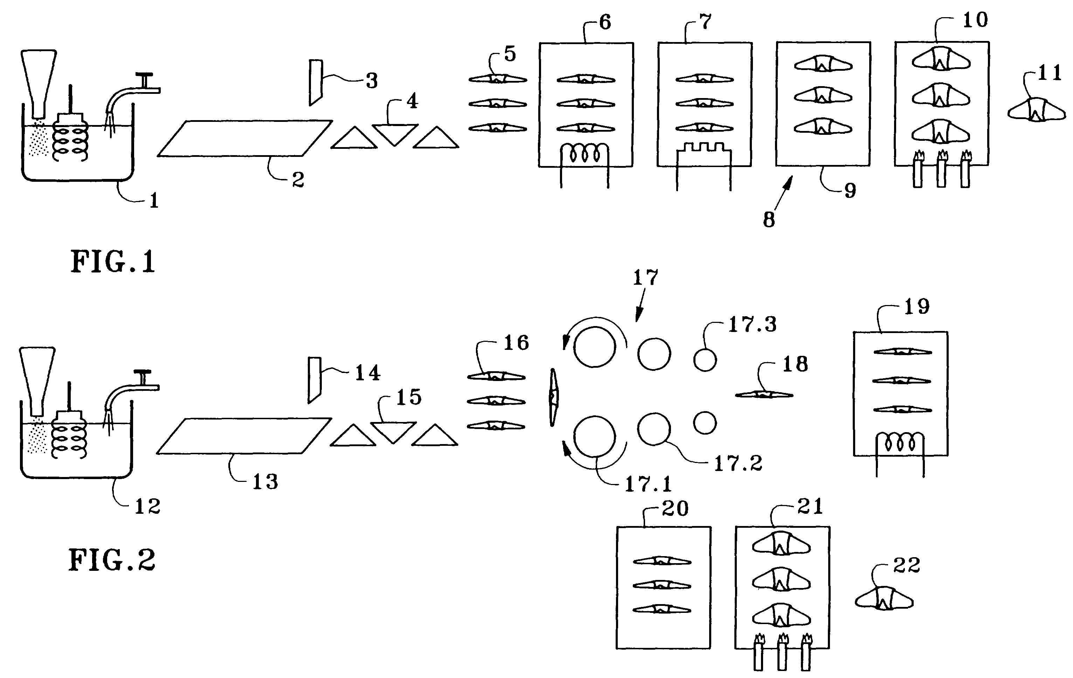

Sur la figure 1, on peut voir un procédé de type connu de préparation industrielle de croissants.

En 1, on mélange les ingrédients, notamment la farine et l'eau et on pétrit la pâte.

En 2, on assure le tourage des croissants en formant une structure laminaire comportant des couches superposées de pâte et des couches de matière grasse, typiquement de la margarine ou du beurre.

En 3, on découpe la pâte en triangle 4.

En 5, on roule les croissants pour leur donner leur forme traditionnelle.

De manière habituelle, la conservation des croissants en cours de fabrication, pour des durées comprises entre plusieurs heures et plusieurs mois, peut être assurée par la congélation 6.

En 7, on décongèle les croissants avant une étape de pousse 8 dans une chambre de pousse 9 comportant des moyens de réglage de la température et de l'hydrométrie. Typiquement, la pousse de croissants dure 1 à 2 heures à une température de 28 à 30°C et une humidité de 80 %. Pendant la pousse, les levures, présentes dans la pâte de croissant, dégradent les sucres en dégageant du gaz carbonique, ce qui entraîne un gonflement des croissants qui triplent de volume.

En 10, les croissants sont cuits dans un four. Après la cuisson, les croissants 11 sont prêts à être consommés.

La fabrication traditionnelle de croissants 11 nécessite de disposer d'une chambre de pousse 9 qui constitue un investissement important, occupe un grand volume et consomme beaucoup d'énergie. Le débit de fabrication en continu de croissants est limité par la capacité de la chambre de pousse, dans laquelle on doit de plus prévoir un espace entre les croissants adjacents tenant compte de leur augmentation de volume en cours de pousse. En effet, un contact entre croissants provoque un collage de la pâte avec dégradation de leurs aspects.

Pour réduire le temps séparant la décongélation 7 de la disponibilité des croissants prêts à consommer, on a proposé des croissants dits "pré-poussés" qui ont été congelés à la sortie de la chambre de pousse après la levée de la pâte. Les croissants pré-poussés congelés sont d'un prix de revient élevé et occupent un volume important. De plus, les croissants pré-poussés sont extrêmement fragiles, leurs qualités organoleptiques et leurs aspects pouvant être compromis par des contraintes mécaniques ou toute rupture de la chaîne de froid.

Sur la figure 2, on peut voir l'exemple préféré du procédé selon la présente invention. Tout d'abord, on prépare la pâte, par exemple à partir des mêmes ingrédients que celle des croissants classiques. Toutefois, le procédé selon la présente invention est amélioré en ajoutant du gluten et un hydrocoloïde comestible ou un mélange d'hydrocoloïdes comestibles, notamment de la gélatine, avantageusement soluble dans l'eau, et de l'hydrochlorure de cystéine, couramment appelé cystéine. Avantageusement, on dose la cystéine de manière à ce qu'elle présente une action réductrice sur le gluten de manière à favoriser son allongement. Les glutens forment des parois étanches de cellules qui en retenant la vapeur d'eau participent de manière prépondérante au développement des croissants lors de la cuisson. La souplesse des glutens est améliorée par la cystéine qui les rend moins coriaces, alors que l'améliorant favorise l'étanchéité des parois des cellules de gluten en diminuant leur porosité. La formule peut également comporter de la farine de gomme de guar. La gélatine et la gomme de guar augmentent la rétention d'eau dont l'évaporation dans les cellules de gluten lors de la cuisson favorise le développement de la pâte. De plus, la gélatine améliore l'étanchéité de cellules individuelles formées par les glutens et permet d'augmenter de 10 % le volume des croissants prêts à consommer. L'exemple préféré de produits mis en oeuvre est donné par le tableau 1, les ingrédients de deux exemples d'améliorant mis en oeuvre étant décrits dans les tableaux 2 et 3.

Il est à noter que la levure est rajoutée principalement pour obtenir un croissant ayant le même goût que les croissants classiques. Toutefois, la fabrication de croissants ou tout autre produit à base de pâte levée ou levée feuilletée dépourvue de levures, ne sort pas du cadre de la présente invention.

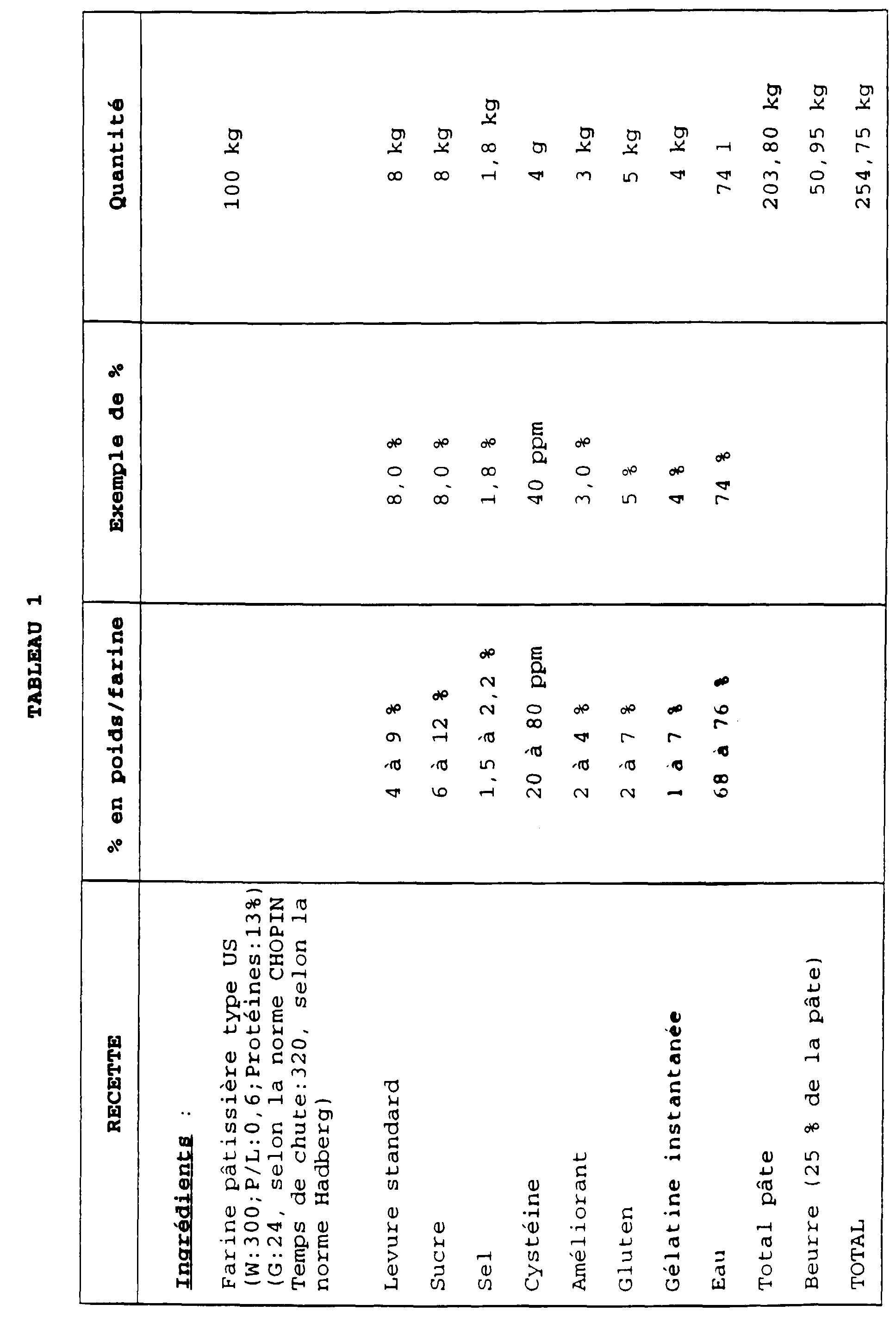

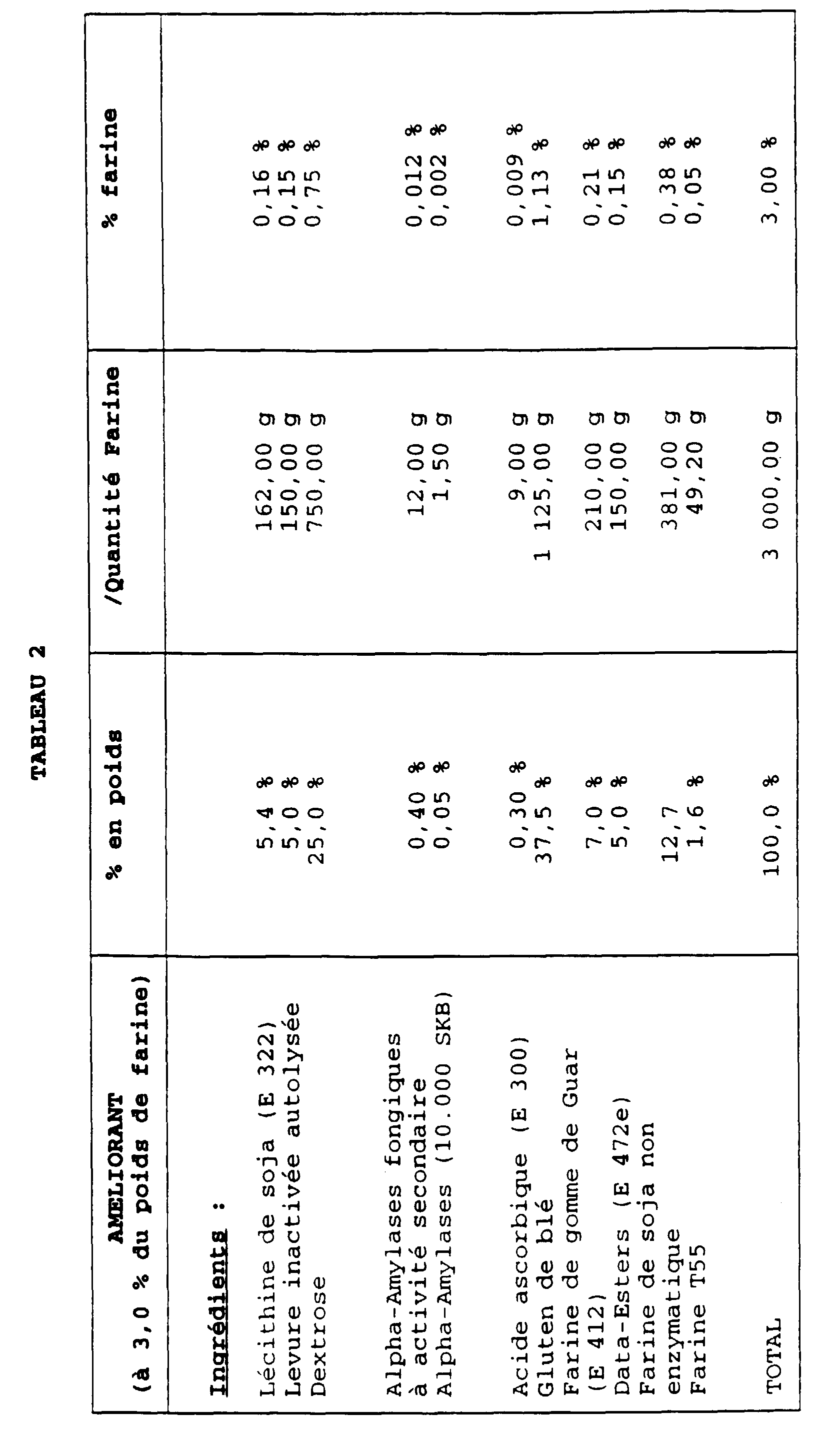

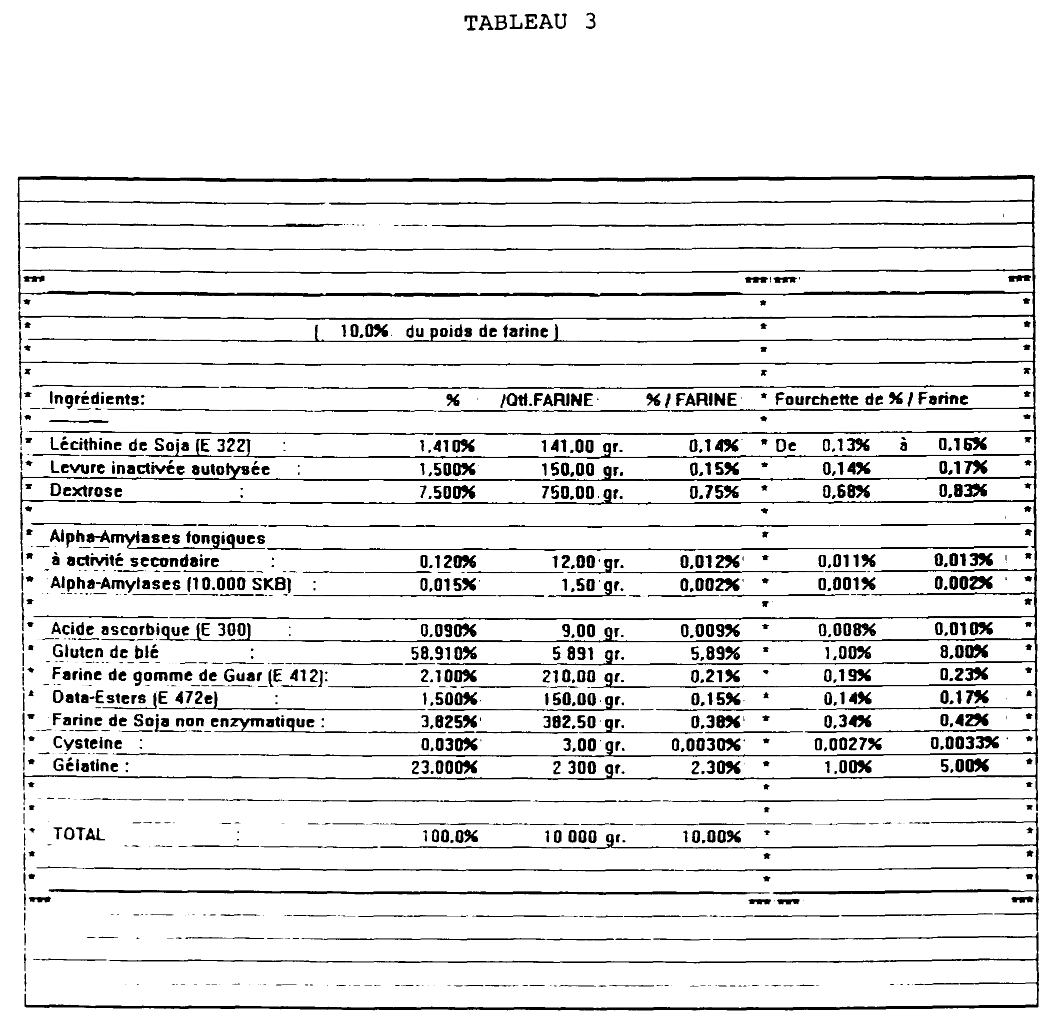

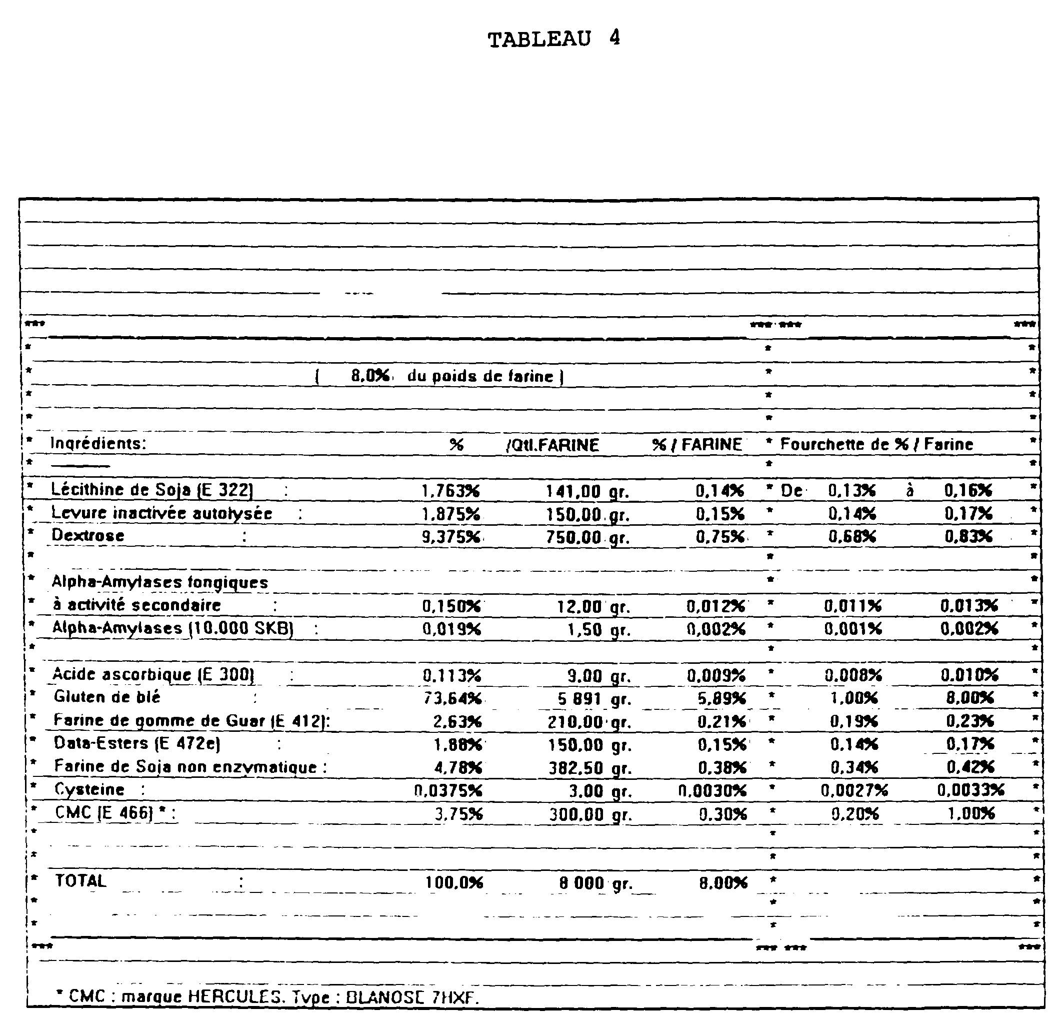

La gélatine peut être remplacée ou complétée dans l'améliorant par d'autres hydrocoloïdes comestibles comme par exemple la pectine ou la carboxyméthylcellulose, appelée couramment CMC (code européen : E466).

L'intérêt d'utilisation de cet additif réside essentiellement dans les propriétés et caractéristiques suivantes : se dissout rapidement en eau froide, agit comme régulateur rhéologique, liant, stabilisant, colloïde protecteur et agent de rétention d'eau permettant ainsi un meilleur développement à la cuisson et une meilleure conservation des produits, forme des films résistant aux huiles, aux graisses et aux gaz, donnant des produits plus développés et plus réguliers, permet d'améliorer la résistance des pâtes au cisaillement pendant les phases de pétrissage, est physiologiquement inerte, n'a aucune incidence sur les qualités organoleptiques des produits finis, permet d'augmenter l'hydratation des pâtes de 5 à 15 %.

Dans le tableau 4, on peut voir l'exemple préféré du procédé selon la présente invention avec les fourchettes de pourcentage permettant d'adapter aux différentes farines mises en oeuvre, la CMC ainsi que les autres additifs ou ingrédients.

La CMC mise en oeuvre dans le tableau 4 est fabriquée par la Société HERCULES, type BLANOSE 7HXF ou AQUASORB (Marques déposées).

La CMC et la gélatine permettent d'obtenir des résultats comparables quant aux produits finis.

On peut également mettre en oeuvre un améliorant à base de pectine par exemple de type FREEZE-BIG (Marque déposée) commercialisée par la Société HERCULES.

Il est bien entendu que les hydrocoloïdes précités peuvent être mélangés entre eux ou avec d'autres hydrocoloïdes comestibles. De même, la mise en oeuvre d'autres hydrocoloïdes ou de leurs mélanges permettent d'améliorer le développement de la pâte et ne sort pas du cadre de la présente invention.

Il est bien entendu que la fabrication d'autres produits que les croissants à partir du mélange des tableaux 1 à 4 ne sort pas du cadre de la présente invention.

Dans l'exemple de fabrication des croissants de la figure 2, en 12, on introduit à une température ambiante de 15° C dans un pétrin à spirale 74 litres d'eau dans lequel on ajoute 100 kg de farine. Le mélange eau plus farine ne doit pas, de préférence, dépasser 14°C. On ajoute ensuite 8 kg de sucre, 1,8 kg de sel, 3 kg d'améliorant (tableau 2), 5 kg de gluten, 4 kg de gélatine soluble, par exemple de type SG vendue par la Société PB GELATINE, 4 g de cystéine correspondant à 40 ppm. Il est possible d'adjoindre à la préparation jusqu'à 10 kg de rognures récentes dont la température ne dépasse pas 15°C. On pétrit en première vitesse pendant 5 mn à une température comprise entre 10 et 20°C, de préférence entre 12 et 14°C, par exemple à 13°C, puis on ajoute 8 kg de levure en pétrissant en deuxième vitesse pendant 3 mn. La température en fin de pétrissage est par exemple égale à 20°C, plus ou moins 2°C.

Les fourchettes des composants du tableau 1 sont fonction de la qualité de la farine et des caractéristiques physiques et organoleptiques du produit que l'on souhaite obtenir.

En 13, on effectue le tourage, par chaîne automatique avec extrudeur. On règle tout d'abord sur l'extrudeur le pourcentage désiré de matière grasse, typiquement du beurre. Les pâtes extrudées sont refroidies en chambre de congélation pendant 45 mn, de manière à amener leur température à environ 12°C. La structure laminaire extrudée est repliée sur elle-même, par exemple selon la technique traditionnelle dite de trois tours simples.

En 14, on effectue la découpe de parts individuelles de pâte.

En 16, on façonne la pâte en forme de croissant.

En 17, on aplatit les croissants de manière à allonger les glutens sans les casser.

L'aplatissement de la pâte n'est pas une simple opération de mise en forme du produit, mais en assurant l'allongement des glutens de manière à permettre le développement de la pâte lors de la cuisson indépendamment de l'action de la levure, constitue une caractéristique essentielle de l'invention. L'aplatissement permet par exemple de réduire l'épaisseur de la pâte d'un facteur supérieur ou égal à 3, par exemple compris entre 2 et 4, de préférence égal à 3. Par exemple, l'épaisseur d'un morceau de pâte 16 en forme de croissant, dont l'épaisseur de départ est par exemple égale à 25 mm est réduite lors de l'étape d'aplatissement 17 de 3 à 12 mm, de préférence à 8 mm.

L'aplatissement peut être obtenu par exemple par mise sous presse. Avantageusement, on aplatit la pâte par laminage. Avantageusement, on utilise un laminoir progressif comportant une pluralité de paires de rouleaux de plus en plus rapprochés 17.1, 17.2, 17.3. Le développement régulier des croissants est favorisé par un laminage symétrique. Par exemple, des moyens de guidage (non représentés) orientent l'axe longitudinal des croissants 16 parallèlement aux axes des rouleaux de laminage 17.1, 17.2 et 17.3. De bons résultats ont également été obtenus avec une paire unique de rouleaux de grand diamètre par exemple égal à 50 cm.

Dans l'exemple préféré de réalisation, on met en oeuvre un rouleau de laminage flottant guidé en translation verticale par des montants disposés aux deux extrémités du rouleau, chaque montant étant muni d'une encoche verticale.

Le rouleau applique son poids sur le croissant dont les surépaisseurs soulèvent légèrement ledit rouleau guidé verticalement par les encoches.

Les rouleaux de laminage peuvent être utilisés par paires, les deux rouleaux de chaque paire étant disposés de part et d'autre du croissant, ou aplatir le croissant sur un tapis roulant. Le laminage est avantageusement effectué à une température comprise entre 8 et 10°C, par exemple à 10°C.

Il est à noter qu'avant la cuisson, les croissants laminés 18 présentent un faible encombrement et ne sont pas collants, ce qui facilite leur manutention. Pour certains produits, comme par exemple du pain ou des brioches, il peut être envisagé un repos entre 10 et 45 mn à une température de 25 à 32°C avec une humidité de 60 à 80 %. Les croissants sont cuits directement (à l'étape 21) ou congelés avant la cuisson si on désire augmenter la durée de conservation.

En 19, on surgèle les croissants prêts à cuire.

En 20, on effectue une décongélation partielle des croissants par un repos de 10 à 15 mn à température ambiante.

Bien que le procédé selon l'invention permet de fabriquer des produits de viennoiserie ou du pain sans étape de pousse, il est bien entendu que l'on peut faire pousser ces produits avant la cuisson sans sortir du cadre de la présente invention.

Avant cuisson, on effectue avantageusement le dorage des croissants.

En 21, on effectue la cuisson dans un four, de préférence préchauffé à 220°C. Les croissants 22 selon la présente invention ont les caractéristiques organoleptiques équivalant à ceux des croissants frais de type connu.

La congélation permet d'alimenter en produits prêts à cuire des points de cuisson, notamment les points de vente au détail ainsi qu'une vente, du produit cru au consommateur final, grand public. L'excellente conservation et le volume réduit du produit permet son transport sur des grandes distances, notamment à l'exportation.

Il est bien entendu que la présente invention n'est pas limitée aux croissants mais s'applique également à d'autres produits de viennoiseries, notamment aux pains au chocolat, pains aux raisins, brioches ou autres ainsi qu'aux autres produits à base de pâte levée ou levée feuilletée. De même, la fabrication d'aliments à base de pâte levée, notamment du pain, ne sort pas du cadre de la présente invention. Dans ce dernier cas, on pétrit une pâte à pain classique ou avantageusement comportant un apport d'un hydrocoloïde, notamment de gélatine. La pâte est pétrie, façonnée, découpée, aplatie, avantageusement laminée et cuite. Une congélation postérieure à l'aplatissement, notamment au laminage permet de conserver pendant de longues périodes du pain prêt à cuire.

En variante, on incorpore des ingrédients, par exemple à base de légumes, de viandes, ou de fromages, dans l'aliment selon l'invention notamment dans le pain. Le fourrage peut être cuit antérieurement à son incorporation dans la pâte du pain et/ou subir une cuisson simultanée avec celle de la pâte.

Un tel aliment peut avantageusement être surgelé et commercialisé en portions individuelles ou familiales prêtes à la cuisson.

Un laminage sans adjonction d'améliorant à base d'hydrocoloïde permet d'augmenter le volume de la pâte de 30 % avec de plus un alvéolage plus beau, l'adjonction d'un tel améliorant permet de doubler l'augmentation de volume.

La présente invention s'applique à l'industrie alimentaire.

## Revendications

1. Procédé de fabrication d'un aliment comportant les étapes consistant à :
a) préparer une pâte levée ou levée feuilletée contenant du gluten, à base de farine et d'eau ;
b) pétrir la pâte ;
c) mettre en forme ou façonner la pâte ;
caractérisé en ce qu'il comporte en outre une étape ultérieure consistant à :
d) aplatir un produit à base de pâte en fin de façonnage de façon à allonger les glutens pour permettre le développement de la pâte lors d'une étape ultérieure de cuisson.

2. Procédé selon la revendication 1, caractérisé en ce que l'étape d) est une étape (17) de laminage de la pâte.

3. Procédé selon la revendication 2, caractérisé en ce qu'à l'étape d), la pâte subit un laminage progressif en passant entre une pluralité de paires de rouleaux (17.1, 17.2, 17.3), l'espace ménagé entre les deux rouleaux d'une paire étant inférieur à l'espace ménagé entre les deux rouleaux de la paire précédente.

4. Procédé selon l'une quelconque des revendications précédentes, caractérisé en ce que l'on incorpore dans la pâte un hydrocoloïde comestible ou un mélange d'hydrocoloïdes comestibles.

5. Procédé selon l'une quelconque des revendications précédentes, caractérisé en ce que l'on incorpore dans la pâte de la cystéine dans des proportions correspondant à une action réductrice sur les glutens.

6. Procédé selon la revendication 4 ou 5, caractérisé en ce que le ou les hydrocoloïde(s) comporte(nt) de la gélatine.

7. Procédé selon la revendication 4, 5, ou 6, caractérisé en ce que le ou les hydrocoloïde(s) comporte(nt) de la CMC.

8. Procédé selon la revendication 4, 5, 6 ou 7, caractérisé en ce que le ou les hydrocoloïde(s) comporte(nt) de la pectine.

9. Procédé selon l'une quelconque des revendications précédentes, caractérisé en ce qu'il comporte en outre une étape ultérieure e) de congélation de la pâte aplatie, notamment laminée.

10. Procédé selon la revendication 9, caractérisé en ce qu'il comporte entre l'étape d) d'aplatissement de la pâte et l'étape e) de congélation de la pâte, une étape f) consistant à faire reposer la pâte à température ambiante pendant 10 à 20 mn.

11. Procédé selon l'une quelconque des revendications précédentes, caractérisé en ce qu'il comporte en outre une étape ultérieure g) de cuisson de la pâte.

12. Viennoiserie comportant une pâte levée et feuilletée, notamment aux croissants, caractérisée en ce qu'elle est fabriquée par le procédé selon l'une quelconque des revendications précédentes.

## Patentansprüche

1. Verfahren zur Herstellung eines Nahrungsmittels, umfassend die folgenden Stufen:
a) Herstellen eines aufgegangenen Teiges oder aufgegangenen Blätterteiges, der Gluten enthält, auf der Grundlage von Mehl und Wasser;
b) Kneten des Teiges;
c) Formgebung bzw. Formung des Teiges;
dadurch **gekennzeichnet**, daß es außerdem eine zusätzliche Stufe umfaßt, bestehend aus:
d) Abflachen bzw. Plattdrücken eines Produkts auf Grundlage des Teiges, um dieses in der Weise zu formen bzw. zu bearbeiten, daß die Glutene gestreckt werden, um die Entwicklung des Teiges während einer weiteren Stufe des Backens zu gestatten.

2. Verfahren nach Anspruch 1, dadurch **gekennzeichnet**, daß die Stufe d) eine Stufe (17) des Walzens des Teiges ist.

3. Verfahren nach Anspruch 2, dadurch **gekennzeichnet**, daß in der Stufe d) der Teig eine schrittweise fortschreitende Walzung erfährt, indem er eine Mehrzahl von Walzenpaaren (17.1, 17.2, 17.3) durchläuft, wobei der Zwischenraum zwischen den zwei Walzen eins Paares kleiner ist als der Zwischenraum zwischen den zwei Walzen des vorhergehenden Paares.

4. Verfahren nach einem der vorstehenden Ansprüche, dadurch **gekennzeichnet**, daß man in den Teig ein eßbares Hydrokoloid oder ein Gemisch eßbarer Hydrokoloide einbringt.

5. Verfahren nach einem der vorstehenden Ansprüche, dadurch **gekennzeichnet**, daß man in den Teig Cystein in einer reduktiven Wirkung auf die Glutene entsprechenden Mengenverhältnisse einbringt.

6. Verfahren nach Anspruch 4 oder 5, dadurch **gekennzeichnet**, daß das oder die Hydrokoloid(e) Gelatine umfaßt bzw. umfassen.

7. Verfahren nach einem der Ansprüche 4, 5 oder 6, dadurch **gekennzeichnet**, daß das oder die Hydrokoloid(e) CMC umfaßt bzw. umfassen.

8. Verfahren nach einem der Ansprüche 4, 5, 6 oder 7, dadurch **gekennzeichnet**, daß das oder die Hydrokoloid(e) Pektin umfaßt bzw. umfassen.

9. Verfahren nach einem der vorstehenden Ansprüche, dadurch **gekennzeichnet**, daß es außerdem eine zusätzliche Stufe e) des Tiefkühlens des abgeflachten bzw. plattgedrückten, inbesondere gewalzten Teiges umfaßt.

10. Verfahren nach Anspruch 9, dadurch **gekennzeichnet**, daß es zwischen der Stufe d) des Abflachens bzw. Plattdrückens des Teiges und der Stufe e) des Tiefkühlens des Teiges eine Stufe f) umfaßt, die darin besteht, daß man den Teig bei Raumtemperatur 10 bis 20 min lang ruhen läßt.

11. Verfahren nach einem der vorstehenden Ansprüche, dadurch **gekennzeichnet**, daß es außerdem eine zusätzliche Stufe g) des Backens des Teiges umfaßt.

12. Wiener Backwaren, umfassend einen aufgegangenen Blätterteig, insbesondere Hörnchen, dadurch **gekennzeichnet**, daß sie durch das Verfahren nach einem der vorstehenden Ansprüche hergestellt worden sind.

## Claims

1. Process for the manufacture of a food product comprising the steps consisting in :
a) preparing a leavened dough or a leavened puff pastry containing gluten, based on flour and water ;
b) kneading the dough ;
c) shaping or forming the dough ;
characterized in that it comprises, in addition, a subsequent step consisting in :
d) rolling out a product based on dough at the end of the forming so as to extend the glutens in order to allow the development of the dough during a subsequent baking step.

2. Process according to claim 1, characterized in that step d) is a step (17) of laminating the dough.

3. Process according to claim 2, characterized in that step d), the dough is progressively laminated by passing between a plurality of pairs of rolls (17.1, 17.2, 17.3), the space left between the two rolls of a pair being less than the space left between the two rolls of the preceding pair.

4. Process according to any one of the preceding claims, characterized in that an edible hydrocolloid or a mixture of edible hydrocolloids is incorporated into the dough.

5. Process according to any one of the preceding claims, characterized in that cystein is incorporated into the dough in proportions corresponding to a reducing action on the glutens.

6. Process according to Claim 4 or 5, characterized in that the hydrocolloid(s) comprise(s) gelatin.

7. Process according to Claim 4, 5 or 6, characterized in that the hydrocolloid(s) comprise(s) CMC.

8. Process according to Claim 4, 5, 6 or 7, characterized in that the hydrocolloid(s) comprise(s) pectin.

9. Process according to any one of the preceding claims, characterized in that it comprises, in addition, a subsequent step e) of freezing the rolled out, particularly laminated, dough.

10. Process according to Claim 9, characterized in that it comprises between the step d) of rolling out the dough and the step e) of freezing the dough, a step f) consisting in resting the dough at room temperature for 10 to 20 min.

11. Process according to any one of the preceding claims, characterized in that it comprises, in addition, a subsequent step g) of baking the dough.

12. Viennese bakery product comprising a leavened puff pastry, particularly croissants, characterized in that it is manufactured by the process according to any one of the preceding claims.
